# EUROPÄISCHE PATENTSCHRIFT

(11) **EP 2 018 765 B1**
(45) Veröffentlichungstag und Bekanntmachung des Hinweises auf die Patenterteilung: **07.10.2009**
(21) Anmeldenummer: 07728488.3
(22) Anmeldetag: 25.04.2007
(51) Int. Cl.: H04M 15/00, H04L 29/06

(54) **STEUERUNG DER DIENSTQUALITÄT UND/ODER DER VERGEBÜHRUNG VON TELEKOMMUNIKATIONSDIENSTEN**
CONTROL OF SERVICE QUALITY AND/OR CHARGING OF TELECOMMUNICATION SERVICES
CONTROLE DE QUALITE DE SERVICE ET/OU TAXATION DE SERVICE DE TELECOMMUNICATION

(30) Priorität: 05.05.2006 DE 102006022046
(43) Veröffentlichungstag der Anmeldung: 28.01.2009
(73) Patentinhaber: Nokia Siemens Networks GmbH & Co. KG, 81541 München (DE)
(72) Erfinder: SCHRAMM, Mirko, 13187 Berlin (DE); BELLING, Thomas, 85435 Erding (DE)
(86) Internationale Anmeldenummer: PCT/EP2007/054032
(87) Internationale Veröffentlichungsnummer: WO 2007/128693

(56) Entgegenhaltungen:
- WO-A-20/04100466
- ERICSSON: "Operator Controlled QoS" 3GPP TSG SA WG2, XX, XX, Bd. SA2#50, Nr. S2-60049, 16. Januar 2006 (2006-01-16), Seite 5pp, XP007901697
- "3rd Generation Partnership Project 3GPP TS 23.203 V0.4.0 (2006-02)" ETSI STANDARDS, EUROPEAN TELECOMMUNICATIONS STANDARDS INSTITUTE, SOPHIA-ANTIPO, FR, Bd. 3-SA2, Nr. V040, Februar 2006 (2006-02), XP014033549 ISSN: 0000-0001

## Beschreibung

Die Erfindung betrifft ein Verfahren zum Ermöglichen einer Steuerung der Dienstqualität und/oder der Dienstvergebührung bei Telekommunikationsdiensten, an denen mehrere Dienstknoten beteiligt sind.

Häufig werden Telekommunikationsdienste über die Grenzen mehrerer miteinander verbundener Telekommunikationsnetze oder Telekommunikationsnetzteile hinweg erbracht. Solche Telekommunikationsnetze oder -teile sind üblicherweise durch Gateways miteinander verbunden. Diese Gateways ermöglichen die Übertragung von bei den Telekommunikationsnetzen auftretenden Nutzdaten von einem Telekommunikationsnetz an das angrenzende Telekommunikationsnetz. Die Gateways weisen den Nutzdatenströmen z.B. die erforderlichen oder garantierten Datenübertragungsbandbreiten zu und/oder ermöglichen eine Vergebührung der Übertragung der Nutzdaten.

Die Steuerung solcher Gateways erfolgt über Kontrollknoten (control nodes, Steuerungsknoten), welche beispielsweise eine der folgenden Funktionen ausführen bzw. aufweisen: eine sogenannte "Policy-Decision-Funktion" (ermöglicht die Steuerung der Dienstqualität), eine sogenannte "Service-Policy-Decision-Funktion" (ermöglicht die Steuerung der Dienstqualität), eine "Charging-Rules-Funktion" (ermöglicht die Steuerung der Dienstvergebührung) oder eine "Policy-Control-and-Charging-Rules-Funktion" (ermöglicht die Steuerung der Dienstqualität und der Dienstvergebührung). Im Rahmen dieser Anmeldung wird auch die Steuerung der Qualität einer Transportverbindung (bearer) oder der Aufbau einer Transportverbindung mit einer bestimmten Qualität als "Steuerung der Dienstqualität" bezeichnet.

Zur Steuerung der Dienstqualität und/oder der Dienstvergebührung benötigt der Kontrollknoten Dienstinformationen, also Informationen über den aktuell in dem Telekommunikationsnetz vorbereiteten oder ausgeführten Telekommunikationsdienst, dessen Nutzdatenströme über das Gateway übertragen werden. Solche Dienstinformationen umfassen beispielsweise die IP-Adressen und die Port-Nummern der an einem Telekommunikationsdienst beteiligten Geräte (also beispielsweise IP-Adressen und Port-Nummern eines Kommunikationsendgerätes und eines Dienst-Servers), Informationen über die Art des Telekommunikationsdienstes und die für diesen Telekommunikationsdienst notwendige Dienstqualität (z. B. die benötigte Bandbreite der Datenübertragung und maximal zulässige Verzögerungszeiten). Derartige Dienstinformationen werden von an dem Telekommunikationsdienst beteiligten Dienstknoten bereitgestellt. Bei derartigen Dienstknoten kann es sich beispielsweise um einen Kommunikationsnetzknoten handeln, der eine "Call-Session-Control-Function" realisiert oder auch um den den Kommunikationsdienst erbringenden Dienstserver.

Insbesondere an netzübergreifenden Telekommunikationsdiensten (beispielsweise im Falle des sogenannten Roamings) können mehrere Dienstknoten beteiligt sein, welche jeweils Dienstinformationen an ein und denselben Kontrollknoten übermitteln. Dabei kann der Fall auftreten, dass die verschiedenen Dienstknoten unterschiedliche Dienstinformationen an den Kontrollknoten übermitteln. Der Kontrollknoten kann dann nicht feststellen, welche Dienstinformationen korrekt sind und welche Dienstinformationen nicht korrekt sind. Selbst wenn die verschiedenen Dienstknoten identische Dienstinformationen an den Kontrollknoten senden, können bei dem Kontrollknoten ungewollte Fehlfunktionen auftreten. Dies kann z.B. dann der Fall sein, wenn seitens des Kontrollknotens fälschlicherweise davon ausgegangen wird, dass die Dienstinformationen der verschiedenen Dienstknoten zu jeweils unterschiedlichen Kommunikationsdiensten gehören. Beispielsweise könnte ein Kontrollknoten bei Eintreffen von zwei von unterschiedlichen Dienstknoten stammenden Dienstinformationen, welche jeweils Informationen über eine benötigte Datenübertragungsbandbreite von 100 KBit/s enthalten, eine Bandbreite von 2 mal 100 KBit/s, also insgesamt 200 KBit/s bereitstellen.

Der Erfindung liegt die Aufgabe zugrunde, ein Verfahren anzugeben, mit dem bei Telekommunikationsdiensten, an denen mehrere Dienstknoten beteiligt sind, eine sichere und zuverlässige Steuerung der Dienstqualität und/oder der Dienstvergebührung ermöglicht wird.

Diese Aufgabe wird erfindungsgemäß gelöst durch ein Verfahren zum Ermöglichen einer Steuerung der Dienstqualität und/oder der Dienstvergebührung (z.B. an einem Gateway) bei Telekommunikationsdiensten, an denen mehrere Dienstknoten beteiligt sind, wobei bei Vorbereitung und/oder Durchführung eines Kommunikationsdienstes ein Austausch von Signalisierungsinformationen zwischen einem Kommunikationsendgerät und mindestens zwei an dem Kommunikationsdienst beteiligten Dienstknoten erfolgt, die Dienstknoten zur Übermittlung von diesen Kommunikationsdienst betreffenden Dienstinformationen zu einem Kontrollknoten ausgestaltet sind, und der Kontrollknoten zum Empfangen der diesen Kommunikationsdienst betreffenden Dienstinformationen von den mindestens zwei Dienstknoten ausgestaltet ist, wobei bei dem Verfahren der Kontrollknoten (anhand der von den Dienstknoten übermittelten Dienstinformationen) ermittelt, ob die von den mindestens zwei Dienstknoten übermittelten Dienstinformationen ein und denselben Kommunikationsdienst betreffen, und falls die Dienstinformationen ein und denselben Kommunikationsdienst betreffen, der Kontrollknoten Dienstinformationen aus den übermittelten Dienstinformationen auswählt und diese (ausgewählten) Dienstinformationen zur Steuerung der Dienstqualität und/oder der Dienstvergebührung verwendet. Hierbei werden vorteilhafterweise nur die (ausgewählten) Dienstinformationen von dem Kontrollknoten verwendet, um die Steuerung der Dienstqualität und/oder der Dienstvergebührung durchzuführen. Damit sind Fehlfunktionen aufgrund mehrfach vorliegender Dienstinformationen ausgeschlossen und auch eine versehentliche Steuerung einer Dienstqualität, welche andernfalls z.B. durch Ermitteln eines Vielfachen der benötigten Bandbreite höher sein könnte als benötigt, und/oder eine mehrfache Dienstvergebührung werden sicher vermieden.

Es ist auch vorgesehen, das Verfahren so auszugestalten: Verfahren zum Ermöglichen einer Steuerung der Dienstqualität und/oder der Dienstvergebührung (z.B. an einem Gateway) bei Telekommunikationsdiensten, an denen mehrere Dienstknoten beteiligt sind, wobei bei Vorbereitung und/oder Durchführung eines Kommunikationsdienstes ein Austausch von Signalisierungsinformationen zwischen einem Kommunikationsendgerät und mindestens zwei an dem Kommunikationsdienst beteiligten Dienstknoten erfolgt, die Dienstknoten zur Übermittlung von diesen Kommunikationsdienst betreffenden Dienstinformationen zu einem Kontrollknoten ausgestaltet sind, und der Kontrollknoten zum Empfangen der diesen Kommunikationsdienst betreffenden Dienstinformationen von den mindestens zwei Dienstknoten ausgestaltet ist, wobei bei dem Verfahren der Kontrollknoten (anhand der von den Dienstknoten übermittelten Dienstinformationen) ermittelt, ob die von den mindestens zwei Dienstknoten übermittelten Dienstinformationen ein und denselben Kommunikationsdienst betreffen, und falls diese Dienstinformationen ein und denselben Kommunikationsdienst betreffen, ein Dienstknoten ausgewählt wird, und nur die von dem ausgewählten Dienstknoten stammenden Dienstinformationen zur Steuerung der Dienstqualität und/oder der Dienstvergebührung verwendet werden. Hierbei werden vorteilhafterweise nur die von dem einen ausgewählten Dienstknoten stammenden Dienstinformationen von dem Kontrollknoten verwendet, um die Steuerung der Dienstqualität und/oder der Dienstvergebührung durchzuführen. Zu verschiedenen Zeitpunkten können dabei verschiedene Dienstknoten ausgewählt werden. Die oben genannten Vorteile treffen auch auf dieses Verfahren zu.

Das Verfahren kann so ablaufen, dass der Kontrollknoten ermittelt, ob die Dienstinformationen ein und denselben Kommunikationsdienst betreffen, indem der Kontrollknoten überprüft, ob in den von den mindestens zwei Dienstknoten übermittelten Dienstinformationen übereinstimmende Vergebührungskennungen enthalten sind. Dabei ist insbesondere vorteilhaft, dass Vergebührungskennungen - also verbindungsspezifische Parameter - verwendet werden, welche den Kommunikationsdienst eindeutig beschreiben bzw. kennzeichnen. Vorteilhafterweise können dabei Vergebührungskennungen verwendet werden, welche bereits heute z. B. zur Zuordnung von verschiedenen Vergebührungsdaten zu einem Kommunikationsdienst verwendet werden. Dadurch erübrigt sich die Generierung von neuen Kennungen.

Das Verfahren kann auch so ablaufen, dass der Kontrollknoten ermittelt, ob die Dienstinformationen ein und denselben Kommunikationsdienst betreffen, indem der Kontrollknoten überprüft, ob die von den mindestens zwei Dienstknoten übermittelten Dienstinformationen ein und dasselbe Kommunikationsendgerät betreffen, und nur wenn die Dienstinformationen ein und dasselbe Kommunikationsendgerät betreffen, der Kontrollknoten überprüft, ob in den Dienstinformationen übereinstimmende Vergebührungskennungen enthalten sind. Diese Variante zeichnet sich durch einen besonders geringen Rechen- und Verarbeitungsaufwand seitens des Kontrollknotens aus, da der Kontrollknoten üblicherweise sowieso die in den Dienstinformationen enthaltenen Informationen bezüglich des Kommunikationsendgerätes (also beispielsweise die IP-Adresse des Kommunikationsendgerätes) ausliest. Durch Vergleich dieser Informationen ist es in einfacher Art und Weise möglich, zu überprüfen, ob die Dienstinformationen ein und dasselbe Kommunikationsendgerät betreffen. Nur wenn das zutrifft, brauchen von dem Kontrollknoten die Vergebührungskennungen auf Übereinstimmung überprüft zu werden.

Das Verfahren kann vorteilhafterweise auch so ablaufen, dass der Kontrollknoten ermittelt, ob die Dienstinformationen ein und denselben Kommunikationsdienst betreffen, indem der Kontrollknoten überprüft, ob in den von den mindestens zwei Dienstknoten übermittelten Dienstinformationen übereinstimmende, den Austausch der Signalisierungsinformationen kennzeichnende Kennungen (Signalisierungsinformationskennungen) enthalten sind. Beispiele für derartige den Austausch der Signalisierungsinformationen kennzeichnende Kennungen sind beispielsweise die bei SIP-Dialogen (SIP = Session Initiation Protokoll) auftretenden "Call Identifier", "Local Tag" und "Remote Tag". Mit Hilfe dieser Kennungen kann sicher und eindeutig ermittelt werden, ob die Dienstinformationen ein und derselben Kommunikationsdienst betreffen.

Das Verfahren kann auch so ablaufen, dass der Kontrollknoten ermittelt, ob die Dienstinformationen ein und denselben Kommunikationsdienst betreffen, indem der Kontrollknoten überprüft, ob in den von den mindestens zwei Dienstknoten übermittelten Dienstinformationen übereinstimmende Steuerinformationen für ein die Kommunikationsdienst-Nutzdaten weiterleitendes Gateway enthalten sind. Solche Steuerinformationen beschreiben die zu dem Kommunikationsdienst zugehörigen Nutzdatenströme (beispielsweise IP-Ströme) und werden gelegentlich auch als "Filterinformationen für das Gateway" bezeichnet. Ein Beispiel für derartige Filterinformationen ist ein sogenanntes "IP-5-Tupel", bestehend aus der IP-Adresse und Port-nummer des Ziels von IP-Paketen, aus der IP-Adresse und Port-nummer des Absenders von IP-Paketen, sowie aus einem Protokollkennzeichner des innerhalb des Internet Protocol transportierten Protokolls. Wenn die in verschiedenen Dienstinformationen enthaltenen Steuerinformationen übereinstimmen, dann stellt der Kontrollknoten fest, dass die Dienstinformationen ein und denselben Kommunikationsdienst betreffen. Diese Lösung ist insbesondere für den Roaming-Fall interessant, wenn im besuchten Netz keine Vergebührung für die Übertragung der Nutzdaten stattfindet. In diesem Fall werden die Nutzdaten im besuchten Netz kostenlos (Free of Charge) übertragen und daher werden von dem Heimatnetz keine detaillierten dienstspezifischen Informationen (also beispielsweise keine Vergebührungskennung) an den im besuchten Netz vorhandenen Kontrollknoten gesendet. In diesem Fall liegen im besuchten Netz lediglich die Steuerinformationen für das Gateway (und ggf. zusätzlich Informationen über die erforderliche Dienstqualität) vor. Auch in diesem Roaming-Fall kann anhand der Steuerinformationen zweifelsfrei festgestellt werden, ob die Dienstinformationen ein und denselben Kommunikationsdienst betreffen oder nicht.

Das erfindungsgemäße Verfahren kann so ablaufen, dass der Dienstknoten ausgewählt wird, der die höchste Priorität aller derjenigen Dienstknoten aufweist, deren Dienstinformationen ein und denselben Kommunikationsdienst betreffen. Mittels einer solchen Prioritätssteuerung kann sehr schnell und einfach der Dienstknoten ausgewählt werden, dessen Dienstinformationen zu verwenden sind.

Das Verfahren kann erfindungsgemäß so ablaufen, dass den Dienstknoten jeweils eine Priorität zugewiesen wird, und die Dienstknoten Prioritätsinformationen über die ihnen zugewiesene Priorität an den Kontrollknoten übermitteln, woraufhin der Kontrollknoten den Dienstknoten mit der höchsten Priorität auswählt. Dabei wird den Dienstknoten bei ihrer Konfiguration jeweils eine Priorität zugewiesen, beispielsweise ist in jedem Dienstknoten ein Prioritätswert abgespeichert. In diesem Fall braucht auf Seiten des Kontrollknotens nicht die Priorität sämtlicher Dienstknoten bekannt zu sein, sondern der Kontrollknoten braucht lediglich die Prioritätsinformationen der einzelnen Dienstknoten zu empfangen.

Das Verfahren kann vorteilhafterweise aber auch so ablaufen, dass den Dienstknoten jeweils eine Priorität zugewiesen wird, Prioritätsinformationen über die den Dienstknoten zugewiesene Priorität im Kontrollknoten gespeichert werden, und der Kontrollknoten den Dienstknoten mit der höchsten Priorität auswählt. Dies ermöglicht es vorteilhafterweise, den Konfigurationsaufwand bei den Dienstknoten gering zu halten, weil nicht in jedem Dienstknoten eine Prioritätsinformation abgespeichert zu werden braucht. Vorteilhafterweise werden an einer einzigen Stelle, nämlich im Kontrollknoten, die Prioritäten für alle Dienstknoten verwaltet.

Dabei kann das Verfahren so ablaufen, dass einem eine "Call-Session-Control-Funktion" realisierenden Dienstknoten eine geringere Priorität zugewiesen wird als den anderen Dienstknoten. Durch diese Zuweisung einer geringeren Priorität wird vorteilhafterweise berücksichtigt, dass ein eine "Call-Session-Control-Function" realisierender Dienstknoten oftmals nur über ungenaue oder unvollständige Dienstinformationen verfügt. Dadurch, dass den anderen Dienstknoten eine höhere Priorität zugewiesen wird als dem die "Call-Session-Control-Function" realisierenden Dienstknoten wird vorteilhafterweise erreicht, dass bei Vorhandensein eines anders ausgestalteten Dienstknotens die Dienstinformationen des anderen Dienstknotens verwendet werden. Damit ergibt sich die Möglichkeit einer präziseren und genaueren Steuerung der Dienstqualität und/oder Dienstvergebührung.

Das Verfahren kann auch so ausgestaltet sein, dass für verschiedene Kommunikationsdienste ein und demselben Dienstknoten verschiedene Prioritäten zugewiesen werden. Dadurch wird vorzugsweise eine dienstspezifische Festlegung der Prioritäten möglich. Damit lässt sich vorzugsweise erreichen, dass für einen ersten Kommunikationsdienst die Dienstinformationen eines ersten Dienstknotens verwendet werden (wenn der erste Dienstknoten eine höhere Priorität hat als ein zweiter Dienstknoten), während dessen für einen zweiten Kommunikationsdienst die Dienstinformationen des zweiten Dienstknotens verwendet werden (wenn der erste Dienstknoten eine niedrigere Priorität hat als der zweite Dienstknoten). Die Kommunikationsdienste können dabei vorzugsweise mit Hilfe eines Kennzeichens in Form eines sogenannten "Application Function-Application Identifier AVP" unterschieden werden.

Das Verfahren kann vorzugsweise so ablaufen, dass bei Beteiligung eines neuen Dienstknotens an dem Kommunikationsdienst, wobei dem neuen Dienstknoten eine höhere Priorität zugewiesen ist als den bisher beteiligten Dienstknoten, der Kontrollknoten die von dem neuen Dienstknoten übermittelten Dienstinformationen verwendet. Damit kann vorzugsweise selbst während des Ablauf eines Kommunikationsdienstes von einem bisherigen Dienstknoten, dessen Dienstinformationen verwendet wurden, umgeschaltet werden auf den neuen Dienstknoten, dessen Dienstinformationen in Zukunft für diesen Kommunikationsdienst verwendet werden sollen. Somit ist vorteilhafterweise eine dynamische Umschaltung bzw. Übergabe von einem Dienstknoten zu einem neuen Dienstknoten mit höherer Priorität möglich, wenn während des Kommunikationsdienstes ein solcher neuer Dienstknoten zusätzlich zu den bisher genutzten Dienstknoten in den Kommunikationsdienst eingebunden wird. Ein solcher neuer Dienstknoten kann beispielsweise ein Ansage-Server sein, welcher nur für eine kurze Ansage in einem Kommunikationsdienst verwendet wird und welcher daher nur für eine kurze Zeitspanne an den Kommunikationsdienst beteiligt ist.

Das erfindungsgemäße Verfahren kann vorzugsweise so ablaufen, dass die zur Übermittlung der Dienstinformationen vorgesehenen Signalisierungsverbindungen zwischen dem Kontrollknoten und den nicht ausgewählten Dienstknoten während des Verfahrensablaufs aufrechterhalten werden, und über die Signalisierungsverbindungen die nicht ausgewählten Dienstknoten über bei Durchführung des Dienstes auftretende Ereignisse informiert werden. Dabei wird jedoch nur die Signalisierungsverbindung zwischen dem Kontrollknoten und dem ausgewählten Dienstknoten für die Übertragung der Dienstinformationen zum Kontrollknoten genutzt. Über die Signalisierungsverbindungen zwischen dem Kontrollknoten und dem nicht ausgewählten Dienstknoten können vorteilhafterweise die anderen Dienstknoten über in dem Kommunikationsnetz auftretende Ereignisse (beispielsweise über Funktionen oder Fehlfunktionen des Gateways oder eines Teil-Kommunikationsnetzes) informiert werden.

Das Verfahren kann so ausgestaltet sein, dass während des Verfahrensablaufs Signalisierungsverbindungen zwischen dem Kontrollknoten und mindestens zwei Dienstknoten aufrechterhalten werden. Damit wird sichergestellt, dass stets - auch im Falle eines nicht geplanten Ausfalls eines Dienstknotens oder im Falle eines nur vorübergehend an den Kommunikationsdienst beteiligten Dienstknotens - eine Signalisierungsverbindung zwischen dem Kontrollknoten und mindestens einem Dienstknoten besteht, so dass der Kontrollknoten zu jedem Zeitpunkt Dienstinformationen mindestens eines Dienstknotens erhalten kann.

Das Verfahren kann auch so ablaufen, dass der Kontrollknoten die nicht ausgewählten Dienstknoten darüber informiert, dass die Dienstinformationen eines anderen Dienstknotens verwendet werden, woraufhin die nicht ausgewählten Dienstknoten ihre Signalisierungsverbindung zu dem Kontrollknoten abbauen können. Dadurch wird vorteilhafterweise der Signalisierungsverkehr zwischen den Kontrollknoten und den Dienstknoten gering gehalten, was auch zu Kosteneinsparungen führt.

Das Verfahren kann erfindungsgemäß alternativ aber auch so ablaufen, dass der Kontrollknoten die nicht ausgewählten Dienstknoten darüber informiert, dass die Dienstinformationen eines anderen Dienstknotens verwendet werden, und der Kontrollknoten die Signalisierungsverbindungen zu den nicht ausgewählten Dienstknoten abbaut. Die Information der nicht ausgewählten Dienstknoten kann dabei über eine entsprechende Fehlermeldung erfolgen. Ein Abbau der Signalisierungsverbindung zwischen Kontrollknoten und Dienstknoten kann auch durch einen Abbau oder Verlust der Transportverbindung ausgelöst werden. In diesem Fall ist es sinnvoll, dass der Dienstknoten den Dienst beendet. Wenn der Abbau der Signalisierungsverbindung zu einem ersten Dienstknoten dagegen deswegen erfolgt, weil der Kontrollknoten einen anderen Dienstknoten ausgewählt hat, sollte der erste Dienstknoten den Dienst nicht beenden. Ein Dienstknoten kann diese beiden Fälle anhand der speziellen Fehlermeldung unterscheiden und entsprechend entscheiden, ob er den Dienst abbaut. Dadurch wird vorteilhafterweise einerseits der Signalisierungsverkehr minimiert (Kostenersparnis); andererseits wird durch die spezielle Fehlermeldung vermieden, dass die nicht ausgewählten Dienstknoten unkontrolliert bzw. unkoordiniert die Ausführung des Dienstes beenden.

Das Verfahren kann vorzugsweise so ausgestaltet werden, dass - wenn ein Dienstknoten nur vorübergehend an dem Kommunikationsdienst beteiligt ist - der Dienstknoten dies dem Kontrollknoten mitteilt.

Dann kann das Verfahren auch vorzugsweise so ausgestaltet sein, dass - wenn ein Dienstknoten nur vorübergehend an dem Kommunikationsdienst beteiligt ist - mindestens eine Signalisierungsverbindung zwischen dem Kontrollknoten und einem zweiten Dienstknoten aufrechterhalten wird, damit der Kontrollknoten nach Ende der Beteiligung des Dienstknotens die von dem zweiten Dienstknoten stammenden Dienstinformationen verwenden kann. Hierbei wird vorteilhafterweise die zweite Signalisierungsverbindung zwischen dem Kontrollknoten und dem zweiten Dienstknoten nur dann aufrechterhalten, wenn tatsächlich ein nur vorübergehend (temporär) an dem Kommunikationsdienst beteiligter Dienstknoten vorhanden ist. Dadurch wird einerseits vermieden, dass der Kontrollknoten die Verbindung zu allen Dienstknoten verliert, anderseits wird dem Kontrollknoten aber der Abbau überzähliger Signalisierungsverbindungen und damit eine Verminderung des Signalisierungsverkehrs ermöglicht.

Bei dem Verfahren kann vorteilhafterweise der Kontrollknoten ein eine Policy-Decision-Funktion realisierender Kommunikationsnetzknoten, ein eine Service-Policy-Decision-Funktion realisierender Kommunikationsnetzknoten, ein eine Charging-Rules-Funktion realisierender Kommunikationsnetzknoten oder ein eine Policy-Control-and-Charging-Rules-Funktion realisierender Kommunikationsnetzknoten sein.

Bei dem Verfahren kann vorzugsweise der Dienstknoten ein eine Call-Session-Control-Funktion realisierender Kommunikationsnetzknoten oder ein den Kommunikationsdienst erbringender Server ist.

Ein Kontrollknoten in Form eines eine Policy-Decision-Funktion (PDF) realisierenden Kommunikationsnetzknotens wird beispielsweise bei der Steuerung der Dienstqualität (Quality of Service, QoS) verwendet. Im Rahmen des 3^{rd} Generation Partnership Projects 3GPP ist zur dienstabhängigen Autorisierung des Aufbaus von IP-Nutzverbindungen über das paketorientierte GPRS-Mobilfunknetz (GPRS = General Packet Radio Service) eine sogenannte "Service Based Local Policy (SBLP)" vorgesehen (Standards TS23.207, TS29.207 und TS29.208). Eine GPRS-Nutzverbindung wird dabei auch als PDP-Kontext (Packet Data Protocol-Kontext) bezeichnet. Ein von einem mobilen Kommunikationsendgerät (User Equipment UE) angestoßener Aufbau und Modifikation von PDP-Kontexten wird am sogenannten GGSN (Gateway GPRS Support Node) über eine sogenannte Go-Schnittstelle von der "Policy Decision Function" (PDF) autorisiert, wobei die "Policy Decision Function" die von dem Kommunikationsendgerät UE gegenwärtig benutzten Dienste kennt. Die "Policy Decision Function" PDF wird von einem Dienstknoten (der eine sogenannte "Application Function" (AF) ausführt) über eine sogenannte Gq-Schnittstelle über diese Dienste informiert.

Der Dienstknoten tauscht mit dem Kommunikationsendgerät zur Aushandlung des Dienstes Signalisierungsinformationen aus. Dieser Austausch findet beispielsweise mittels des "Session Initiation Protocols" (SIP) statt, welches z. B. im sogenannten "Internet Protocol Based Multimedia Subsystem" (IMS) angewendet wird. Diese Signalisierung wird auch als "Dienstsignalisierung" bezeichnet. Die zwischen dem Kommunikationsendgerät und dem Dienstknoten bezüglich der Ausführung eines Dienstes ausgetauschten Signalisierungsinformationen (beispielsweise ein sogenannter SIP-Dialog gemäß RFC 3261) wird auch als "Dienstsignalisierungsinstanz" bezeichnet. Mittels einer sogenannten "Autorisierung" legt der Kontrollknoten (hier die Policy Decision Function PDF) die für den PDP-Kontext erlaubte "Quality of Service" fest, also die Bandbreite für die Übertragung von Nutzdaten (beispielsweise in KBit/s) sowie mittels sogenannter QoS-Klassen auch die erlaubte Verzögerung der Datenpakete.

Ein Kontrollknoten in Form eines eine Charging-Rules-Funktion realisierenden Kommunikationsnetzknotens wird beispielsweise beim sogenannten "Flow Based Charging" (FBC) eingesetzt. Beim FBC handelt es sich um einen Dienstvergebührungsmechanismus, welche im Rahmen des 3^{rd} Generation Partnership Projects beispielsweise in den Standards TS23.125, TS29.210 und 29.211 beschrieben ist. Beim "Flow Based Charging" werden für bestimmte PDP Kontexte von einer "Charging Rules Function" (CRF) sogenannte "Charging Rules" über eine Gx-Schnittstelle am Gateway GPRS Support Node (GGSN) installiert. Die "Charging Rules" beschreiben IP-Datenströme sowie die für diese IP-Datenströme anzuwendenden Vergebührungsregeln. Die "Charging Rules Function" wählt die Charging Rules unter Berücksichtigung der gegenwärtig vom Kommunikationsendgerät genutzten Dienste aus, wobei die Charging Rules Function von einem Dienstknoten über die Rx-Schnittstelle über diese Dienste informiert wird.

Im Rahmen des 3^{rd} Generation Partnership Projects, Release 7 wird im Standard TS23.203 die Verschmelzung der "Service Based Local Policy" SBLP und der "Flow Based Charging-Funktionalitäten" vorgesehen; dabei werden die "Policy Decision Function" PDF und die "Charging Rules Function" CRF zur sogenannten "Policy and Charging Rules Function" PCRF vereint. Diese kombinierte Funktionalität wird auch als "Policy and Charging Control" PCC bezeichnet.

Sowohl im Fall von "Service Based Local Policy" SBLP (d. h. bei der Steuerung der Dienstqualität) als auch im Fall von "Flow Based Charging" FBC (d. h. bei der Steuerung der Dienstvergebührung) und bei der Kombination der Steuerung der Dienstqualität und der Dienstvergebührung (Policy and Charging Control PCC) wird also ein einziger Kontrollknoten (also der die "Policy Decision Function" realisierende Knoten, der die "Charging Rules Function" CRF realisierende Knoten oder der die "Policy and Charging Rules Function" PCRF realisierende Knoten) von einem oder mehreren Dienstknoten mit Informationen über die genutzten Dienste versorgt. Die Dienstknoten realisieren dabei die Applikationsfunktionen AF. Dabei baut der Dienstknoten / die Applikationsfunktion AF die Signalisierungsverbindung zu demjenigen Kontrollknoten auf, der für das beteiligte mobile Kommunikationsendgerät zuständig ist. Es ist also Aufgabe der Applikationsfunktion AF / des Dienstknotens, den Kontrollknoten zu kontaktieren, der zuständig ist für das durch z. B. seine IP-Adresse identifizierte mobile Kommunikationsendgerät.

Bei bestimmten Telekommunikationsdiensten können mehrere Dienstknoten für die selbe Dienstsignalisierungsinstanz (z. B. für einen IMS-Dialog zwischen einem Kommunikationsendgerät und einem Video-Server) an der Diensterbringung beteiligt sein. Dieser Fall kann insbesondere bei der Nutzung des IP-Multimedia Subsystems IMS auftreten, wobei dann das IMS zur Unterstützung des Kommunikationsdienstes (z. B. zur Auswahl eines geeigneten Servers) genutzt wird; der Server erbringt den eigentlichen Dienst. Dann tauscht der in die Dienstsignalisierung eingebundene Dienstknoten (IMS-Knoten, z. B. die Call Session Control Function CSCF) mit dem Kontrollknoten Informationen aus. Ein den Telekommunikationsdienst erbringender Server (Applikationsserver) kann aber auch selbst mit dem Kontrollknoten interagieren und Nachrichten austauschen. Beispielsweise kann bei einem IMS-vermittelten Video-Kommunikationsdienst (der auf einen speziellen Video-Server abläuft, von diesem Video-Server erbracht wird) sowohl der Dienstkno-_ ten (CSCF) des IMS als auch der Video-Server als Dienstknoten mit dem Kontrollknoten interagieren und Nachrichten austauschen. Die Call Session Control Function CSCF nutzt dazu die in der Dienstsignalisierung verfügbaren Informationen; der Video-Server kann darüber hinaus noch auf spezielle dienstspezifische Informationen (z. B. Art des Videos, Länge des Videos usw.) zurückgreifen und kann auf diesen dienstspezifischen Informationen basierende Dienstinformationen an den Kontrollknoten senden.

Das beschriebene Verfahren ist auch für den Roaming-Fall anwendbar. Für den Roaming-Fall werden im Rahmen des 3GPP Release 7 zwei Instanzen der "Policy and Charging Rules Function" PCRF diskutiert: eine im Heimatnetz vorgesehene PCRF und eine im besuchten Netz vorgesehene PCRF. Die PCRF im besuchten Netz erhält alle benötigten Informationen aus der Dienstsignalisierung von der Proxy-Call Session Control Function P-CSCF. Allerdings werden (insbesondere für das Flow Based Charging) bestimmte nur im Heimatnetz vorhandene Informationen benötigt. Daher interagieren die Serving-Call Session Control Function S-CSCF bzw. der Applikationsserver im Heimatnetz mit der PCRF (Kontrollknoten) im Heimatnetz. Dieser Kontrollknoten gibt dann die relevanten Informationen an die PCRF des besuchten Netzes weiter. Somit können auch im Roaming-Fall für den gleichen Kommunikationsdienst ggf. unterschiedliche Dienstinformationen zu der PCRF des besuchten Netzes gelangen. Im Rahmen dieser Anmeldung wird das Zusammenwirken von einem Kontrollknoten mit mehreren Dienstknoten beschrieben. Jedoch kann das beschriebene Verfahren auch bei dem oben dargelegten Roaming-Fall angewendet werden. Wenn der Kontrollknoten im Heimatnetz als ein spezieller Dienstknoten betrachtet wird und sich wie ein Dienstknoten verhält, dann lässt sich durch das beschriebene Verfahren auch dann anwenden, wenn ein Kontrollknoten im besuchten Netz von einem Dienstknoten im besuchten Netz und von einem anderen Kontrollknoten im Heimatnetz Dienstinformationen zum gleichen Kommunikationsdienst erhält. Der Kontrollknoten im Heimatnetz stellt dann einfach einen anderen Dienstknoten dar.

Im Rahmen der vom European Telecommunications Standards Institute (ETSI) standardisierten "Telecoms & Internet converged Services & Protocols for Advanced Networks" (TISPAN) wird ein sogenanntes "Next Generation Network" NGN beschrieben, welches ebenfalls das IMS verwendet. Dabei wird als Kontrollknoten eine sogenannte "Service Policy Decision Function" SPDF verwendet. Die SPDF wird sowohl zur Steuerung der beim Übergang zum Core-Netz eines anderen Betreibers gelegenen sogenannten "Core Resource and Admission Control Function" (Core-RACF) verwendet als auch zur Steuerung der beim Übergang zum Zugangsnetz gelegenen sogenannten "Access Ressource and Admission Control Function" (Access-RACF), vgl. den Standard ETSI TS 185.001. Es wird hierbei angestrebt, dass die SPDF beim Übergang zum Core-Netz eines anderen Betreibers mit der SPDF beim Übergang zum Zugangsnetz identisch ist, und eine zentrale Kontrolle der Dienstqualität vornimmt. Gemäß TISPAN, Release 1, ETSI TS 183.021 wird an der Grenze zu einem Core-Kommunikationsnetz eines anderen Netzbetreibers die SPDF von der sogenannten "IMS Border Control Function" (IBCF, Dienstknoten) über die sogenannte Gq-Schnittstelle mit Informationen versorgt. Gemäß ETSI ES 282.003 wird an der Grenze zu einem Zugangsnetz die SPDF ebenfalls von einem Dienstknoten (AF), vorzugsweise einer Proxy Call Session Control Function (P-CSCF) über die sogenannte Gq-Schnittstelle mit Informationen versorgt. In diesem Fall tritt also auch das Problem auf, dass eine einzige SPDF (Kontrollknoten) Dienstinformationen von zwei getrennten Applikationsfunktionen AF (Dienstknoten) erhält, wobei beispielsweise ein Dienstknoten als IBCF und der andere Dienstknoten als P-CSCF ausgestaltet sein kann. Auch in diesem Fall ist das beschriebene Verfahren anwendbar, insbesondere zur Auswahl der für die Kontrolle der Dienstqualität zu verwendenden Dienstinformationen. Allerdings kontrolliert die SPDF nicht nur die Dienstqualität, sondern kann auch so genannte "Network Address Translator" (NAT) für die den ausgehandelten Diensten entsprechenden Nutzverbindungen kontrollieren. Ein getrennter kontrollierter NAT kann sich jeweils am Übergang zum Zugangsnetz wie auch am Übergang zu dem Core-Netz eines anderen Betreibers befinden. Die SPDF reicht zwischen AF und NAT bezüglich der NAT-Kontrolle spezifische Information weiter, im Besonderen veränderte IP-Adressen und Port-Nummern. In diesem Fall muss die SPDF mit P-CSCF und IBCF unterschiedliche Informationen bezüglich der NAT-Kontrolle austauschen. Deswegen ist hier besonders die Ausführungsform vorteilhaft, in der die zur Übermittlung der Dienstinformationen vorgesehenen Signalisierungsverbindungen zwischen dem Kontrollknoten und den bezüglich der Kontrolle der Dienstqualität nicht ausgewählten Dienstknoten während des Verfahrensablaufs aufrechterhalten werden, wobei hierüber vorzugsweise weiterhin spezifische Information bezüglich der NAT-Kontrolle ausgetauscht wird. Bei der Verwendung von einem NAT ist bei der Auswertung der Dienstinformationen im Kontrollknoten darauf zu achten, dass die Ermittlung der Zugehörigkeit zu einem Kommunikationsdienst nicht auf Basis der Filterinformationen stattfindet, da die Dienstknoten vor bzw. hinter dem NAT unterschiedliche IP-Adressen und eventuell auch Portnummern für den gleichen Kommunikationsdienst an den Kontrollknoten übermitteln.

Die durch das beschriebene Verfahren gelösten Probleme können beispielsweise darin bestehen, dass verschiedene Dienstknoten unterschiedliche Beschreibungen der zu autorisierenden Quality of Service bzw. der anzuwendenden Vergebührungs-Regeln als Dienstinformationen an den Kontrollknoten übermitteln.

Der Kontrollknoten kann dann im Allgemeinen nicht unterscheiden, welche der widersprüchlichen Informationen anzuwenden sind. Es kann aber auch dann zu Fehlfunktionen kommen, wenn die Dienstknoten dieselben Dienstinformationen liefern, der Kontrollknoten aber fälschlicherweise davon ausgeht, dass sich die verschiedenen Dienstinformationen auf verschiedene Dienstsignalisierungsinstanzen (d. h. verschiedene Kommunikationsdienste) beziehen. Somit könnte beispielsweise ein Kontrollknoten eine Bandbreite autorisieren, welche doppelt so groß ist wie benötigt, wenn er von zwei Dienstknoten dieselben Dienstinformationen bezüglich der Quality of Service erhält. Auch dieses Problem lässt sich mit dem beschriebenen Verfahren lösen.

Im Folgenden wird die Erfindung anhand von Ausführungsbeispielen näher erläutert. Dazu ist in
- Figur 1: ein erstes Ausführungsbeispiel des erfindungsgemäßen Verfahrens und in
- Figur 2: ein zweites Ausführungsbeispiel des erfindungsgemäßen Verfahrens dargestellt.

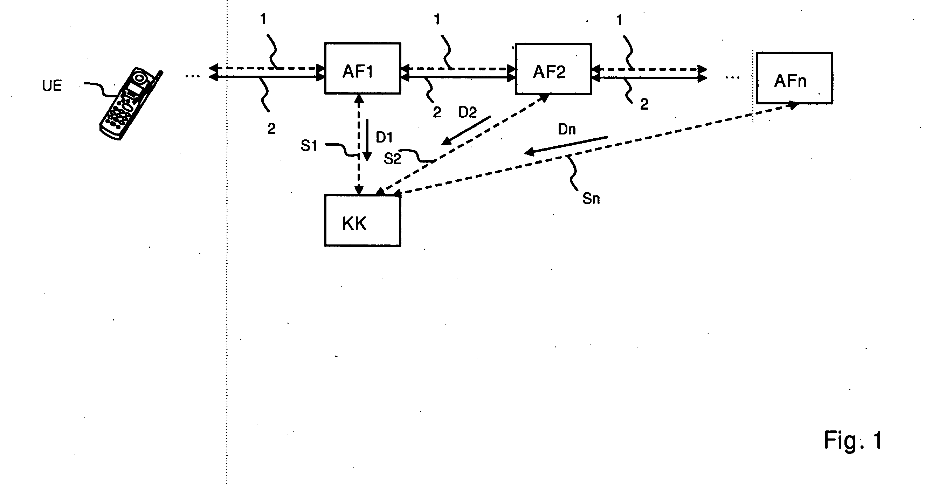

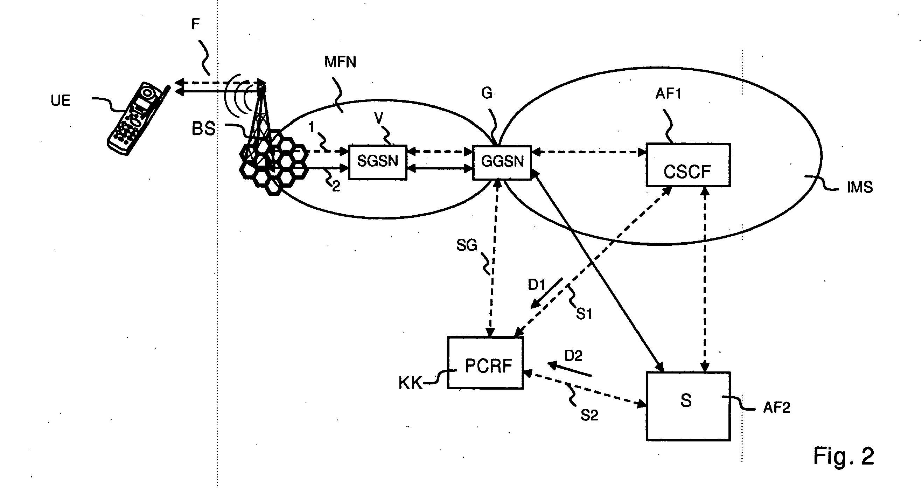

In Figur 1 ist ein Kommunikationsendgerät UE (User Equipment) in Form eins Mobiltelefons, ein erster Dienstknoten AF1, einer zweiter Dienstknoten AF2, ein n-ter Dienstknoten AFn und ein Kontrollknoten KK dargestellt. Bei der Vorbereitung und/oder Durchführung eines Kommunikationsdienstes findet ein Austausch von Signalisierungsinformationen 1 zwischen dem Kommunikationsendgerät UE und dem ersten an dem Kommunikationsdienst beteiligten Dienstknoten AF1, dem zweiten an dem Kommunikationsdienst beteiligten Dienstknoten AF2 und ggf. weiteren an dem Kommunikationsdienst beteiligten Dienstknoten AF3 bis AFn statt. Bei dem Dienstknoten AFn handelt es sich beispielsweise um einen Dienst-Server (einen diensterbringenden Rechner, z.B. einen Video-Server), der den Kommunikationsdienst für das Kommunikationsendgerät UE erbringt. Bei der Dienstdurchführung werden von dem Server AFn Nutzdaten über den zweiten Dienstknoten AF2 und den ersten Dienstknoten AF1 an das Kommunikationsendgerät UE übertragen. Diese Nutzdatenübertragung ist mit einer durchgehenden Linie dargestellt und mit dem Bezugszeichen 2 gekennzeichnet. Die Nutzdaten brauchen nicht notwendigerweise über alle Dienstknoten übertragen zu werden, in Fig. 2 ist z.B. eine Variante dargestellt, bei der die Nutzdaten nicht über den ersten Dienstknoten AF1 übertragen werden.

Der erste Dienstknoten AF1, der zweite Dienstknoten AF2 und der Server AFn senden Dienstinformationen D1, D2 und Dn an den Kontrollknoten KK. Diese Dienstinformationen D1, D2 und Dn werden über Signalisierungsverbindungen S1, S2 und Sn zu dem Kontrollknoten übertragen und stellen Signalisierungsinformationen dar. Der Kontrollknoten KK wählt dann - wie unten ausführlich beschrieben wird - aus den Dienstknoten AF1, AF2 bis AFn einen Dienstknoten aus (ausgewählter Dienstknoten). Im Ausführungsbeispiel ist der Dienstknoten AFn der ausgewählte Dienstknoten. Der Kontrollknoten KK nutzt also im Ausführungsbeispiel nur die Dienstinformationen des ausgewählten Dienstknotens AFn (d. h. die Dienstinformationen des Servers), um ein in der Figur 1 nicht dargestelltes Gateway so anzusteuern, dass dieses die für den Kommunikationsdienst notwendige Dienstqualität bei der Übertragung der Nutzdaten bereitstellt und eine Vergebührung des Dienstes, insbesondere eine Vergebührung der Übertragung der Nutzdaten, durchführt. Das Gateway dient dabei der Nutzdatenübertragung 2.

In Figur 2 ist ein weiteres Ausführungsbeispiel des erfindungsgemäßen Verfahrens dargestellt. Ein Kommunikationsendgerät UE ist über eine Funkschnittstelle F mit einer Basisstation BS eines zellularen Mobilfunknetzes MFN verbunden. Das zellulare Mobilfunknetz enthält eine Vermittlungsstelle V in Form eines Serving GPRS Support Nodes (SGSN). Die Vermittlungsstelle V ist über ein Gateway G (Netzzwischenknoten, Netzübergangsknoten, Netzverbindungsknoten; hier in Form eines Gateway GPRS Support Nodes (GGSN)) mit einem "IP Multimedia Subsystem" IMS verbunden. Das IP Multimedia Subsystem IMS weist einen ersten Dienstknoten AF1 in Form eines eine "Call Session Control Function" (CSCF) realisierenden Netzknotens auf. Dieser erste Dienstknoten AF1 ist mit einem Dienst-Server S verbunden, der im Ausführungsbeispiel als ein Video-Server S ausgestaltet ist. Der Dienst-Server S stellt einen zweiten Dienstknoten AF2 dar. Der erste Dienstknoten AF1 ist über eine erste Signalisierungsverbindung S1 mit einem Kontrollknoten KK verbunden, der zweite Dienstknoten AF2 ist über eine zweite Signalisierungsverbindung S2 mit dem Kontrollknoten KK verbunden. Der Kontrollknoten führt im Ausführungsbeispiel eine "Policy and Charging Rules Function" (Regel-Entscheidungs-und-Vergebührungs-Regel-Funktion, PCRF) aus. Der Kontrollknoten KK ist über eine weitere Signalisierungsverbindung SG mit dem Gateway G verbunden und steuert das Gateway G unter anderem bezüglich der Dienstquälität der Übertragung von Kommunikationsdienst-Nutzdaten und bezüglich der Vergebührung der Übertragung von Kommunikationsdienst-Nutzdaten (Dienstvergebührung). Wie in Fig. 1 ist die Übertragung von Signalisierungsinformationen mit gestrichelten Linien 1 dargestellt; die Nutzdatenübertragung ist mit durchgehenden Linien 2 dargestellt.

Ein Nutzer des Kommunikationsendgerätes UE beschließt, einen Telekommunikationsdienst zu nutzen, welcher von dem zweiten Dienstknoten AF2, welcher im Ausführungsbeispiel einen Video-Server S darstellt, angeboten wird. Der Nutzer fordert mittels seines Kommunikationsendgeräts UE eine Übertragung eines Video-Films von dem Server S zu dem Kommunikationsendgerät UE an. Daraufhin werden Signalisierungsinformationen zwischen dem Kommunikationsendgerät UE, der Vermittlungsstelle V, dem Gateway G, dem ersten Dienstknoten AF1 und dem zweiten Dienstknoten AF2 ausgetauscht. In der Figur 2 wird die Übertragung von Signalisierungsinformationen mittels gestrichelter Linien dargestellt, während die Übertragung von Nutzdaten mittels durchgezogener Linien dargestellt wird.

Der erste Dienstknoten ist ausgestaltet zur Übermittlung von diesen Kommunikationsdienst (Video-Dienst) betreffenden Dienstinformationen D1 an den Kontrollknoten KK. Der zweite Dienstknoten AF2 ist ebenfalls ausgestaltet zur Übermittlung von den Video-Dienst betreffenden Dienstinformationen D2 an den Kontrollknoten KK. Der Kontrollknoten seinerseits ist ausgestaltet zum Empfangen der den Video-Dienst betreffenden Dienstinformationen D1 von dem ersten Dienstknoten AF1 und zum Empfangen der den Video-Dienst betreffenden Dienstinformationen D2 von dem zweiten Dienstknoten AF2. Der zweite Dienstknoten AF2 übermittelt die Dienstinformationen D2 über die Signalisierungsverbindung S2 an den Kontrollknoten KK, wobei diese Dienstinformationen D2 umfassen:
- die IP-Adresse und die Port-Nummer des zweiten Dienstknotens AF2,
- die IP Adresse und die Port-Nummer des Kommunikationsendgerätes UE,
- Informationen über die Art des Dienstes ("Video-Dienst"),
- Informationen über die erforderliche Dienstqualität (Quality of Service), z.B. "die für Video-Dienst zugesicherte Bandbreite bei der Datenübertragung beträgt 2000 KBit/s, und
- eine Vergebührungskennung (ein sogenannter "AF Charging Identifier").

Diese Dienstinformationen D2 werden über die zweite Signalisierungsverbindung S2 an den Kontrollknoten KK gesendet und von diesem empfangen.

Der erste Dienstknoten AF1 sendet über die erste Signalisierungsverbindung S1 Dienstinformationen D1 an den Kontrollknoten KK. Diese Signalisierungsinformationen umfassen jedoch im Ausführungsbeispiel nur die IP-Adressen und die Port-Nummern jeweils des Kommunikationsendgerätes UE und des zweiten Dienstknotens AF2 sowie dieselbe Vergebührungskennung (den sogenannten "AF Charging Identifier"), die auch in den Dienstinformationen D2 enthalten ist.

Der Kontrollknoten ermittelt nun anhand der von den Dienstknoten AF1 und AF2 übertragenen Dienstinformationen D1 und D2, ob die von dem ersten Dienstknoten AF1 übertragenen Dienstinformationen D1 und die von dem zweiten Dienstknoten AF2 übertragenen Dienstinformationen D2 denselben Kommunikationsdienst (hier den Video-Dienst) betreffen. Dazu überprüft der Kontrollknoten KK zunächst, ob die von dem ersten Dienstknoten AF1 übermittelnden Dienstinformationen D1 und die von dem zweiten Dienstknoten AF2 übermittelten Dienstinformationen D2 dasselbe Kommunikationsendgerät betreffen. Da sowohl in den von dem ersten Dienstknoten übermittelten Dienstinformationen D1 als auch in den Dienstinformationen D2 jeweils die IP-Adresse und die Port-Nummer des Kommunikationsendgerätes UE enthalten ist, erkennt der Kontrollknoten KK, dass sowohl die Dienstinformationen D1 als auch die Dienstinformationen D2 dasselbe Kommunikationsendgerät UE betreffen. Daraufhin überprüft der Kontrollknoten KK, ob in den Dienstinformationen D1 und in den Dienstinformationen D2 übereinstimmende Vergebührungskennungen enthalten sind. Da in den Dienstinformationen D1 und D2 übereinstimmende Vergebührungskennungen enthalten sind, stellt der Kontrollknoten KK fest, dass die Dienstinformationen ein und denselben Kommunikationsdienst des Kommunikationsendgerätes UE betreffen.

In einer alternativen Ausführungsform kann der Kontrollknoten KK zur Ermittlung, ob die Dienstinformationen D1 und D2 ein und denselben Kommunikationsdienst betreffen, auch lediglich überprüfen, ob in den Dienstinformationen D1 und D2 dieselbe Vergebührungskennung enthalten ist. Eine Überprüfung, ob die von dem ersten Dienstknoten AF1 übermittelnden Dienstinformationen D1 und die von dem zweiten Dienstknoten AF2 übermittelten Dienstinformationen D2 dasselbe Kommunikationsendgerät betreffen, ist dann nicht notwendig.

In einer weiteren alternativen Ausführungsform kann der Kontrollknoten KK zur Ermittlung, ob die Dienstinformationen D1 und D2 ein und denselben Kommunikationsdienst betreffen, auch ermitteln/überprüfen, ob in den Dienstinformationen D1 und D2 übereinstimmende Signalisierungsinformationskennungen (zum Beispiel sogenannte "Call Identifier", "Local Tags" oder "Remote Tags" des zur Dienstsignalisierung verwendeten SIP-Dialogs) vorhanden sind.

In einer weiteren alternativen Ausführungsform kann der Kontrollknoten KK zur Ermittlung, ob die Dienstinformationen D1 und D2 ein und denselben Kommunikationsdienst betreffen, auch ermitteln/überprüfen, ob in den Dienstinformationen D1 und D2 übereinstimmende Steuerinformationen für das Gateway G enthalten sind.

Nachdem der Kontrollknoten festgestellt hat, dass die Dienstinformationen D1 und D2 beide den Kommunikationsdienst "Video-Dienst" betreffen, wählt der Kontrollknoten einen der beiden Dienstknoten AF1 und AF2 aus und wird nur die von dem ausgewählten Dienstknoten stammenden Dienstinformationen verwenden, um an dem Gateway GGSN die Dienstqualität und/oder die Dienstvergebührung zu steuern. Die Auswahl findet wie folgt beschrieben statt.

Im Ausführungsbeispiel ist dem ersten Dienstknoten AF1 die niedrigste verfügbare Priorität "Priorität 1" zugewiesen. Im Ausführungsbeispiel wird nämlich Dienstknoten, welche eine Call Session Control Function CSCF ausführen, stets die niedrigste Priorität zugewiesen. Dem zweiten Dienstknoten AF2 ist die höhere Priorität "Priorität 3" zugewiesen. Informationen über die zugewiesene Priorität (Prioritätsinformationen) werden von dem Dienstknoten AF1 und dem Dienstknoten AF2 in den Dienstinformationen D1 bzw. in den Dienstinformationen D2 zu dem Kontrollknoten KK übermittelt. Der Kontrollknoten wählt dann denjenigen Dienstknoten aus, der die höchste Priorität aufweist, im Ausführungsbeispiel also den zweiten Dienstknoten AF2. Der zweite Dienstknoten AF2 ist dann der ausgewählte Dienstknoten.

In einem anderen Ausführungsbeispiel können Informationen über die den Dienstknoten AF1 und AF2 jeweils zugewiesene Priorität auch lediglich in dem Kontrollknoten KK gespeichert sein, nicht aber in den Dienstknoten AF1 und AF2 selbst. Der Kontrollknoten KK erkennt dann aus den Dienstinformationen D1, dass diese von dem ersten Dienstknoten AF1 stammen (beispielsweise anhand einer mit den Dienstinformationen D1 übertragenen Absender-Information). Ebenso erkennt der Kontrollknoten KK, dass die zweiten Dienstinformationen D2 von dem zweiten Dienstknoten AF2 stammen. Da für den zweiten Dienstknoten die höhere Priorität gespeichert ist, verwendet der Kontrollknoten nur die zweiten Dienstinformationen D2 zur Steuerung der Dienstqualität und/oder der Dienstvergebührung.

Wenn temporär ein neuer Dienstknoten an dem Kommunikationsdienst "Video-Dienst" beteiligt wird (beispielsweise ein in der Figur 2 nicht dargestellter Dienstknoten zur Erzeugung einer an den Benutzer des Kommunikationsendgerätes UE gerichteten Ansage), dann kann dieser neue Dienstknoten beispielsweise die Priorität "Priorität 4" zugewiesen haben. Wenn dieser neue Dienstknoten dann Dienstinformationen an den Kontrollknoten KK sendet, so würde der Kontrollknoten KK aufgrund der höheren Priorität des neuen Dienstknotens die von diesem neuen Dienstknoten stammenden Dienstinformationen verwenden und nicht wie bisher die Dienstinformationen D2.

Wenn das Kommunikationsendgerät UE einen anderen Kommunikationsdienst anfordert, der ebenfalls von dem zweiten Dienstknoten AF2 erbracht wird, dann kann im Zusammenhang mit diesem anderen Kommunikationsdienst der zweite Dienstknoten AF2 eine andere Priorität zugewiesen bekommen, beispielsweise die Priorität "Priorität 2".

Obwohl im Ausführungsbeispiel der Kontrollknoten KK nur die Dienstinformationen D2 verwendet, wird die Signalisierungsverbindung S1 zu dem ersten Dienstknoten AF1 dennoch aufrecht erhalten. Über die Signalisierungsverbindung S1 kann der erste Dienstknoten AF1 beispielsweise über plötzlich auftretende Ereignisse informiert werden, z. B. über eine Störung am Gateway G.

Das Verfahren kann aber auch so ablaufen, dass der Kontrollknoten KK den ersten Dienstknoten AF1 darüber informiert, dass der Kontrollknoten KK ausschließlich die Dienstinformationen D2 des zweiten Dienstknotens AF2 verwendet und dass der Dienstknoten AF1 daraufhin die Signalisierungsverbindung S1 abbaut. Alternativ kann auch der Kontrollknoten KK den ersten Dienstknoten AF1 darüber informieren, dass er die Dienstinformationen D2 des zweiten Dienstknotens AF2 verwendet und danach selbst die Signalisierungsverbindung S1 zu dem ersten Dienstknoten AF1 abbauen. Es kann aber auch vorgesehen sein, dass während des gesamten Verfahrensablaufs stets Signalisierungsverbindungen zwischen dem Kontrollknoten und mindestens zwei Dienstknoten aufrecht erhalten bleiben, hier also jeweils eine Signalisierungsverbindung zwischen dem Kontrollknoten KK und dem ersten Dienstknoten AF1 und zwischen dem Kontrollknoten KK und dem zweiten Dienstknoten AF2.

Das Verfahren kann auch so ablaufen, dass im Falle des oben erwähnten nur vorübergehend an dem Kommunikationsdienst beteiligten Ansage-Dienstknotens neben der Signalisierungsverbindung zwischen dem Ansage-Dienstknoten und dem Kontrollknoten KK noch mindestens eine zweite Signalisierungsverbindung zwischen dem Kontrollknoten und z.B. dem zweiten Dienstknoten AF2 aufrechterhalten wird. Dann können - sobald der Ansage-Dienstknoten nicht mehr an dem Kommunikationsdienst beteiligt ist - ohne Zeitverzug sofort wieder die von dem zweiten Dienstknoten AF2 stammenden Dienstinformationen D2 verwendet werden.

Es ist ein besonderer Vorteil des beschriebenen Verfahrens, dass bei Telekommunikationsdiensten, an denen mehrere Dienstknoten beteiligt sind, es nicht notwendig ist, die Konfiguration der einzelnen Dienstknoten aufeinander abzustimmen. Jeder Dienstknoten kann (separat und unabhängig von der Konfiguration anderer Dienstknoten) z.B. dahingehend konfiguriert werden, ob er eine Signalisierungsverbindung zu dem Kontrollknoten aufbaut (z. B.: immer Signalisierungsverbindung aufbauen oder nur bei bestimmten Diensten Signalisierungsverbindung aufbauen) und ob oder welche Dienstinformationen/Dienstdaten er an den Kontrollknoten übermittelt. Dies ist insbesondere dann vorteilhaft, wenn die Dienstknoten verschiedenen Netzwerkoperatoren zugehörig sind, wie es beispielsweise oft beim Roaming oder bei der Verwendung von sogenannten "Third Party Application Functions" der Fall ist. Vorteilhafterweise ist in diesen Fällen keine Absprache zwischen den verschiedenen Operatoren notwendig, und ist keine operatoren- und netzwerkübergreifende Konfiguration der verschiedenen Dienstknoten notwendig.

Vorteilhafterweise kann bei dem erfindungsgemäßen Verfahren (z. B. über die Zuweisung von Prioritäten) frei gewählt werden, welchen Dienstknoten man für einen bestimmten Kommunikationsdienst nutzen will, um dessen Dienstinformation zu verwenden. Vorzugsweise können außerdem dienstspezifische Kriterien (z. B. Art oder Preis eines Videos) als Auswahlkriterium für den Informationsaustausch zwischen Dienstknoten und Kontrollknoten benutzt werden. Beispielsweise kann ein Dienstknoten in Form eines Dienst-Servers so konfiguriert sein, dass er nur bei speziellen Videos Dienstinformationen an den Kontrollknoten sendet und mittels dieser Dienstinformationen nur bei bestimmten Videos eine spezielle Art der Dienstvergebührung auslöst oder eine spezielle Dienstqualität anfordert. In diesem Fall kann der Dienst-Server mit den Dienstinformationen auch Informationen übertragen, die nur bei dem Dienst-Server bekannt sind (beispielsweise die Art des Videos). Wenn jedoch derartige dienstspezifische Informationen nicht für die Dienstqualität und/oder Dienstvergebührung relevant sind, dann kann vorteilhafterweise ein anderer Dienstknoten (z.B. die "Call Session Control Function") auf Basis von weniger umfangreichen Informationen die Dienstinformationen an den Kontrollknoten senden. In diesem Fall benötigt z.B. der Dienstserver vorteilhafterweise keine Signalisierungsverbindung zum Kontrollknoten, so dass an dem Dienstserver keine entsprechende Schnittstelle notwendig ist.

Vorteilhafterweise ist das beschriebene Verfahren ein sehr flexibles Verfahren, welches einerseits ermöglicht, die Dienstinformationen des für einen bestimmten Dienst am besten geeigneten Dienstknotens zu verwenden und welches andererseits vermeidet, dass bezüglich ein und desselben Kommunikationsdienstes die Dienstinformationen von mehreren Dienstknoten verwendet werden, damit werden die eingangs beschriebenen Probleme und Schwierigkeiten vermieden. Vorteilhafterweise ist es auch nicht notwendig, die zwischen dem Kommunikationsendgerät und den Dienstknoten ausgetauschten Signalisierungsinformationen an das Verfahren anzupassen, insbesondere brauchen diese Signalisierungsinformationen nicht um dienstspezifische Parameter erweitert zu werden. In diesen ausgetauschten Signalisierungsinformationen muss insbesondere nicht die Information enthalten sein, welcher Dienstknoten die Dienstinformationen an den Kontrollknoten senden soll. Ebenso ist es nicht notwendig, dienstspezifische Daten (im Ausführungsbeispiel z. B. Daten über die Art des Videos) außerhalb des Dienstservers vorhalten zu müssen.

Abkürzungen:
AF "Application Function" (Applikationsfunktion; die im Dienstknoten ablaufende Funktion)
AVP "Address Value Pair"
CRF "Charging Rules Function" (Vergebührungs-Regel-Funktion) CSCF "Call Session Control Function" (Verbindungsstatus-Steuerungsfunktion)
FBC "Flow Based Charging"
GGSN "Gateway GPRS Support Node"
GPRS "General Packet Radio Service"
IBCF "IMS Boarder Control Function"
IMS "Internet Protocol based Multimedia Subsystem"
IP "Internet Protocol"
NGN "Next Generation Network"
PCC "Policy and Charging Control"
PCRF "Policy and Charging Rules Function" (Regel-Entscheidungs-und-Vergebührungs-Regel-Funktion)
P-CSCF "Proxy Call Session Control Function"
PDF "Policy Decision Function" (Regel-Entscheidungs-Funktion)
PDP-Kontext "Packet Data Protocol"-Kontext
QoS "Quality of Service" (Dienstqualität)
RACF "Core Resource and Admission Control Function"
SBLP "Service Based Local Policy"
S-CSCF "Serving Call Session Control Function"
SGSN "Serving GPRS Support Node"
SIP "Session Initiation Protocol"
SPDF "Service Policy Decision Function"(Dienst-Regel-Entscheidungs-Funktion)
UE "User Equipment"

## Patentansprüche

1. Verfahren zum Ermöglichen einer Steuerung der Dienstqualität und/oder der Dienstvergebührung bei Telekommunikationsdiensten, an denen mehrere Dienstknoten (AF1, AF2) beteiligt sind, wobei
- bei Vorbereitung und/oder Durchführung eines Kommunikationsdienstes ein Austausch von Signalisierungsinformationen (1) zwischen einem Kommunikationsendgerät (UE) und mindestens zwei an dem Kommunikationsdienst beteiligten Dienstknoten (AF1, AF2) erfolgt,
- die Dienstknoten (AF1, AF2) zur Übermittlung von diesen Kommunikationsdienst betreffenden Dienstinformationen (D1, D2) zu einem Kontrollknoten (KK) ausgestaltet sind, und
- der Kontrollknoten (KK) zum Empfangen der diesen Kommunikationsdienst betreffenden Dienstinformationen (D1, D2) von den mindestens zwei Dienstknoten (AF1, AF2) ausgestaltet ist, wobei bei dem Verfahren
- der Kontrollknoten (KK) ermittelt, ob die von den mindestens zwei Dienstknoten (AF1, AF2) übermittelten Dienstinformationen (D1, D2) ein und denselben Kommunikationsdienst betreffen, und
- falls die Dienstinformationen (D1, D2) ein und denselben Kommunikationsdienst betreffen, der Kontrollknoten aus den übermittelten Dienstinformationen (D1, D2) Dienstinformationen auswählt und diese Dienstinformationen zur Steuerung der Dienstqualität und/oder der Dienstvergebührung verwendet.

2. Verfahren nach Anspruch 1,
**dadurch gekennzeichnet, dass**
- falls die Dienstinformationen (D1, D2) ein und denselben Kommunikationsdienst betreffen, der Kontrollknoten (KK) einen Dienstknoten (AF2) der mindestens zwei Dienstknoten (AF1, AF2) auswählt und nur die von dem ausgewählten Dienstknoten (AF2) stammenden Dienstinformationen (D2) zur Steuerung der Dienstqualität und/oder der Dienstvergebührung verwendet.

3. Verfahren nach Anspruch 1 oder 2,
**dadurch gekennzeichnet, dass**
der Kontrollknoten (KK) ermittelt, ob die Dienstinformationen (D1, D2) ein und denselben Kommunikationsdienst betreffen, indem
- der Kontrollknoten (KK) überprüft, ob in den von den mindestens zwei Dienstknoten übermittelten Dienstinformationen (D1, D2) übereinstimmende Vergebührungskennungen enthalten sind.

4. Verfahren nach einem der vorhergehenden Ansprüche,
**dadurch gekennzeichnet, dass**
der Kontrollknoten (KK) ermittelt, ob die Dienstinformationen (D1, D2) ein und denselben Kommunikationsdienst betreffen, indem
- der Kontrollknoten (KK) überprüft, ob die von den mindestens zwei Dienstknoten (AF1, AF2) übermittelten Dienstinformationen (D1, D2) ein und dasselbe Kommunikationsendgerät (UE) betreffen, und
- nur wenn die Dienstinformationen (D1, D2) ein und dasselbe Kommunikationsendgerät (UE) betreffen, der Kontrollknoten (KK) überprüft, ob in den Dienstinformationen (D1, D2) übereinstimmende Vergebührungskennungen enthalten sind.

5. Verfahren nach einem der vorhergehenden Ansprüche,
**dadurch gekennzeichnet, dass**
der Kontrollknoten (KK) ermittelt, ob die Dienstinformationen ein und denselben Kommunikationsdienst betreffen, indem
- der Kontrollknoten (KK) überprüft, ob in den von den mindestens zwei Dienstknoten (AF1, AF2) übermittelten Dienstinformationen (D1, D2) übereinstimmende Steuerinformationen, insbesondere IP-5-Tupel, für ein die Kommunikationsdienst-Nutzdaten weiterleitendes Gateway (G) enthalten sind.

6. Verfahren nach einem der vorhergehenden Ansprüche,
**dadurch gekennzeichnet, dass**
- der Kontrollknoten die nicht ausgewählten Dienstknoten (AF1) darüber informiert, dass die Dienstinformationen (D2) eines anderen Dienstknotens (AF2) verwendet werden, woraufhin die nicht ausgewählten Dienstknoten (AF1) ihre Signalisierungsverbindung (S1) zu dem Kontrollknoten (KK) abbauen können.

7. Verfahren nach einem der vorhergehenden Ansprüche,
**dadurch gekennzeichnet, dass**
- der Kontrollknoten (KK) die nicht ausgewählten Dienstknoten (AF1) darüber informiert, dass die Dienstinformationen (D2) eines anderen Dienstknotens (AF2) verwendet werden, und
- der Kontrollknoten (KK) die Signalisierungsverbindungen (S1) zu den nicht ausgewählten Dienstknoten (AF1) abbaut.

8. Verfahren nach einem der vorhergehenden Ansprüche,
**dadurch gekennzeichnet, dass**
- wenn ein Dienstknoten nur vorübergehend an dem Kommunikationsdienst beteiligt ist, mindestens eine Signalisierungsverbindung zwischen dem Kontrollknoten (KK) und einem zweiten Dienstknoten (AF2) aufrechterhalten wird, damit der Kontrollknoten (KK) nach Ende der Beteiligung des Dienstknotens die von dem zweiten Dienstknoten (AF2) stammenden Dienstinformationen (D2) verwenden kann.

9. Verfahren nach einem der vorhergehenden Ansprüche,
**dadurch gekennzeichnet, dass**
- der Kontrollknoten (KK) ein eine Policy-Decision-Funktion realisierender Kommunikationsnetzknoten, ein eine Service-Policy-Decision-Funktion realisierender Kommunikationsnetzknoten, ein eine Charging-Rules-Funktion realisierender Kommunikationsnetzknoten oder ein eine Policy-Control-and-Charging-Rules-Funktion realisierender Kommunikationsnetzknoten ist, und/oder,
- dass der Dienstknoten (AF1, AF2) ein eine Call-Session-Control-Funktion realisierender Kommunikationsnetzknoten oder ein den Kommunikationsdienst erbringender Server ist, und/oder,
- dass einer der Dienstknoten (AF1, AF2) ein Kontrollknoten des Heimatnetzes ist, der dem Kontrollknoten im besuchten Netz Dienstinformationen übermittelt.

10. Ein Kontrollknoten (KK) bestehend aus
- einem Mittel zum Empfangen von Dienstinformationen (D1, D2) die einen Kommunikationsdienst betreffen, wobei die Dienstinformationen (D1, D2) von mindestens zwei Dienstknoten (AF1, AF2) übermittelt werden,
- einem Mittel zum Ermitteln ob die von den mindestens zwei Dienstknoten (AF1, AF2) übermittelten Dienstinformationen (D1, D2) ein und denselben Kommunikationsdienst betreffen,
- einem Mittel zum Auswählen von Dienstinformationen (D1, D2) von den übermittelten Dienstinformationen, wenn die Dienstinformationen (D1, D2) ein und denselben Kommunikationsdienst betreffen, und
- einem Mittel zum Verwenden der Dienstinformationen (D1, D2) zur Steuerung der Dienstqualität und/oder der Dienstvergebührung des Kommunikationsdienstes.

11. Ein Kontrollknoten (KK) nach Anspruch 10, wobei, falls die Dienstinformationen (D1, D2) ein und denselben Kommunikationsdienst betreffen, der Kontrollknoten (KK) einen Dienstknoten (AF2) der mindestens zwei Dienstknoten (AF1, AF2) auswählt und nur die von dem ausgewählten Dienstknoten (AF2) stammenden Dienstinformationen (D2) zur Steuerung der Dienstqualität und/oder der Dienstvergebührung verwendet.

12. Ein Kontrollknoten (KK) nach den Ansprüchen 10 oder 11, wobei das Ermitteln ob die Dienstinformationen (D1, D2) ein und denselben Kommunikationsdienst betreffen das Überprüfen beinhaltet, ob in den von den mindestens zwei Dienstknoten (AF1, AF2) übermittelten Dienstinformationen (D1, D2) übereinstimmende Vergebührungskennungen enthalten sind.

13. Ein Kontrollknoten (KK) nach den Ansprüchen 10 bis 12, wobei das Ermitteln ob die Dienstinformationen (D1, D2) ein und denselben Kommunikationsdienst betreffen das Überprüfen beinhaltet, ob die von den mindestens zwei Dienstknoten (AF1, AF2) übermittelten Dienstinformationen (D1, D2) ein und dasselbe Kommunikationsendgerät (UE) betreffen, und wenn die Dienstinformationen (D1, D2) ein und dasselbe Kommunikationsendgerät (UE) betreffen der Kontrollknoten (KK) überprüft, ob in den Dienstinformationen (D1, D2) übereinstimmende Vergebührungskennungen enthalten sind.

14. Ein Kontrollknoten (KK) nach den Ansprüchen 10 bis 13, wobei das Ermitteln ob die Dienstinformationen (D1, D2) ein und denselben Kommunikationsdienst betreffen das Überprüfen beinhaltet, ob in den von den mindestens zwei Dienstknoten (AF1, AF2) übermittelten Dienstinformationen (D1, D2) übereinstimmende Steuerinformationen, insbesondere IP-5-Tupel, für ein die Kommunikationsdienst-Nutzdaten weiterleitendes Gateway (G) enthalten sind.

15. Ein Kontrollknoten (KK) nach den Ansprüchen 10 bis 14, wobei das Auswählen aus dem Auswählen des Dienstknotens (AF2) besteht, der die höchste Priorität aller derjenigen Dienstknoten (AF1, AF2) aufweist, deren Dienstinformationen (D1, D2) ein und denselben Kommunikationsdienst betreffen.

16. Ein Kontrollknoten (KK) nach den Ansprüchen 10 bis 15 weiter bestehend aus einem Mittel zum Aufrechterhalten von Signalisierungsverbindungen (S1), die zur Übermittlung der Dienstinformationen (D1) zwischen dem Kontrollknoten (KK) und den nicht ausgewählten Dienstknoten (AF1) bestimmt sind, und einem Mittel zum Informieren der nicht ausgewählten Dienstknoten (AF1) über die Signalisierungsverbindungen (S1) über die bei der Durchführung des Dienstes auftretenden Ereignisse.

17. Ein Kontrollknoten (KK) nach den Ansprüchen 10 bis 16 weiter bestehend aus einem Mittel zum Informieren der nicht ausgewählten Dienstknoten (AF1) dass die Dienstinformationen (D2) eines anderen Dienstknotens (AF2) verwendet wird.

18. Ein Kontrollknoten (KK) nach den Ansprüchen 10 bis 17 weiter bestehend aus einem Mittel zum Abbauen der Signalisierungsverbindung (S1) zu den nicht ausgewählten Dienstknoten (AF1).

19. Ein Kontrollknoten (KK) nach den Ansprüchen 10 bis 18 wobei wenn ein Dienstknoten nur vorübergehend an dem Kommunikationsdienst beteiligt ist, mindestens eine Signalisierungsverbindung zwischen dem Kontrollknoten (KK) und einem zweiten Dienstknoten (AF2) aufrechterhalten wird, damit der Kontrollknoten (KK) nach Ende der Beteiligung des Dienstknotens die von dem zweiten Dienstknoten (AF2) stammenden Dienstinformationen (D2) verwenden kann.

20. Ein Kontrollknoten (KK) nach den Ansprüchen 10 bis 19 wobei der Kontrollknoten (KK) mindestens einen der folgenden Kommunikationsnetzknoten beinhaltet:
- einen Kommunikationsnetzknoten mit einer Policy-Decision-Funktion,
- einen Kommunikationsnetzknoten mit einer Service-Policy-Decision-Funktion,
- einen Kommunikationsnetzknoten mit einer Charging-Rules-Funktion, oder
- einen Kommunikationsnetzknoten mit einer Policy-Control-and-Charging-Rules-Funktion.

## Claims

1. Method for allowing control of the quality of service and/or of the service fees for telecommunication services in which a plurality of service nodes (AF1, AF2) are involved,
wherein
- when preparing for and/or carrying out a communication service, an interchange of signaling information (1) takes place between a communication terminal (UE) and at least two service nodes (AF1, AF2) which are involved with the communication service,
- the service nodes (AF1, AF2) are designed to transmit service information (D1, D2), which is relevant to this communication service, to a monitoring node (KK), and
- the monitoring node (KK) is designed to receive from the at least two service nodes (AF1, AF2) the service information (D1, D2) which relates to this communication service,
wherein, in the method,
- the monitoring node (KK) determines whether the service information (D1, D2) which is transmitted by the at least two service nodes (AF1, AF2) relates to one and the same communication service, and
- if the service information (D1, D2) relates to one and the same communication service, the monitoring node selects service information from the transmitted service information (D1, D2), and uses this service information to control the quality of service and/or the service fees.

2. Method as claimed in Claim 1,
**characterized in that**
- if the service information (D1, D2) relates to one and the same communication service, the monitoring node (KK) selects one service node (AF2) of the at least two service nodes (AF1, AF2) and uses only that service information (D2) which originates from the selected service node (AF2) to control the quality of service and/or the service fees.

3. Method as claimed in Claim 1 or 2,
**characterized in that**
the monitoring node (KK) determines whether the service information (D1, D2) relates to one and the same communication service
**in that**
- the monitoring node (KK) checks whether the service information (D1, D2) which is transmitted by the at least two service nodes contains matching charging identifications.

4. Method as claimed in one of the preceding claims,
**characterized in that**
the monitoring node (KK) determines whether the service information (D1, D2) relates to one and the same communication service
**in that**
- the monitoring node (KK) checks whether the service information (D1, D2) which is transmitted by the at least two service nodes (AF1, AF2) relates to one and the same communication terminal (UE), and
- only if the service information (D1, D2) relates to one and the same communication terminal (UE) does the monitoring node (KK) check whether the service information (D1, D2) contains matching charging identifications.

5. Method as claimed in one of the preceding claims,
**characterized in that**
the monitoring node (KK) determines whether the service information relates to one and the same communication service
**in that**
- the monitoring node (KK) checks whether the service information (D1, D2) which is transmitted by the at least two service nodes (AF1, AF2) contains matching control information, in particular IP-5 tuples, for a gateway (G) which passes on the communication service payload data.

6. Method as claimed in one of the preceding claims,
**characterized in that**
- the monitoring node informs those service nodes (AF1) which have not been selected that the service information (D2) of another service node (AF2) is being used, in response to which those service nodes (AF1) which have not been selected can clear their signaling connection (S1) to the monitoring node (KK).

7. Method as claimed in one of the preceding claims,
**characterized in that**
- the monitoring node (KK) informs those service nodes (AF1) which have not been selected that the service information (D2) of another service node (AF2) is being used, and
- the monitoring node (KK) clears the signaling connections (S1) to those service nodes (AF1) which have not been selected.

8. Method as claimed in one of the preceding claims,
**characterized in that**
- if a service node is only temporarily involved in the communication service, at least one signaling connection is maintained between the monitoring node (KK) and a second service node (AF2) in order that the monitoring node (KK) can use the service information (D2) originating from the second service node (AF2) after the end of the involvement of the service node.

9. Method as claimed in one of the preceding claims,
**characterized in that**
- the monitoring node (KK) is a communication network node which provides a policy decision function, a communication network node which provides a service policy decision function, a communication network node which provides a charging rules function, or a communication network node which provides a policy control and charging rules function, and/or
- that the service node (AF1, AF2) is a communication network node which provides a call session control function or a server which provides the communication service, and/or
- that one of the service nodes (AF1, AF2) is a monitoring node in the home network, which transmits service information to the monitoring node in the visited network.

10. Monitoring node (KK) comprising
- a means for reception of service information (D1, D2) which relates to a communication service, with the service information (D1, D2) being transmitted by at least two service nodes (AF1, AF2),
- a means for determination as to whether the service information (D1, D2) which is transmitted by the at least two service nodes (AF1, AF2) relates to one and the same communication service,
- a means for selection of service information (D1, D2) from the transmitted service information when the service information (D1, D2) relates to one and the same communication service, and
- a means for use of the service information (D1, D2) for controlling the quality of service, and/or the service fees for the communication service.

11. Monitoring node (KK) according to Claim 10, in which, if the service information (D1, D2) relates to one and the same communication service, the monitoring node (KK) selects one service node (AF2) of the at least two service nodes (AF1, AF2) and uses only that service information (D2) which originates from the selected service node (AF2) to control the quality of service and/or the service fees.

12. Monitoring node (KK) according to Claims 10 or 11, in which the determination as to whether the service information (D1, D2) relates to one and the same communication service comprises checking whether the service information (D1, D2) which is transmitted by the at least two service nodes (AF1, AF2) contains matching charging identifications.

13. Monitoring node (KK) according to Claims 10 to 12, in which the determination as to whether the service information (D1, D2) relates to one and the same communication service comprises checking whether the service information (D1, D2) which is transmitted by the at least two service nodes (AF1, AF2) relates to one and the same communication terminal (UE), and if the service information (D1, D2) relates to one and the same communication terminal (UE) the monitoring node (KK) checks whether the service information (D1, D2) contains matching charging identifications.

14. Monitoring node (KK) according to Claims 10 to 13, in which the determination as to whether the service information (D1, D2) relates to one and the same communication service comprises checking whether the service information (D1, D2) which is transmitted by the at least two service nodes (AF1, AF2) contains matching control information, in particular IP-5 tuples, for a gateway (G) which passes on the communication service payload data.

15. Monitoring node (KK) according to Claims 10 to 14, in which the selection is comprised by selecting from the service node (AF2) which has the highest priority of all those service nodes (AF1, AF2) whose service information (D1, D2) relates to one and the same communication service.

16. Monitoring node (KK) according to Claims 10 to 15, furthermore comprising a means for maintenance of signaling connections (S1) which are intended to transmit the service information (D1) between the monitoring node (KK) and the non-selected service node (AF1), and a means for information of the non-selected service node (AF1) via the signaling connections (S1) about the events which have occurred while carrying out the service.

17. Monitoring node (KK) according to Claims 10 to 16, furthermore comprising a means for information of the non-selected service nodes (AF1) that the service information (D2) of another service node (AF2) is being used.

18. Monitoring node (KK) according to Claims 10 to 17, furthermore comprising a means for clearing the signaling connection (S2) to the non-selected service nodes (AF1).

19. Monitoring node (KK) according to Claims 10 to 18, in which if a service node is only temporarily involved in the communication service, at least one signaling connection is maintained between the monitoring node (KK) and a second service node (AF2) in order that the monitoring node (KK) can use the service information (D2) originating from the second service node (AF2) after the end of the involvement of the service node.

20. Monitoring node (KK) according to Claims 10 to 19, with the monitoring node (KK) containing at least one of the following communication network nodes:
- a communication network node having a policy decision function,
- a communication network node having a service policy decision function,
- a communication network node having a charging rules function, or
- a communication network node having a policy control and charging rules function.

## Revendications

1. Procédé pour permettre une commande de la qualité de service et/ou de la taxation de service pour des services de télécommunication dans lesquels plusieurs noeuds de service (AF1, AF2) interviennent,
- un échange d'informations de signalisation (1) ayant lieu, lors de la préparation et/ou de l'exécution d'un service de communication, entre un terminal de communication (UE) et au moins deux noeuds de service (AF1, AF2) intervenant dans le service de communication,
- les noeuds de service (AF1, AF2) étant configurés pour transmettre à un noeud de contrôle (KK) des informations de service (D1, D2) concernant ce service de communication et
- le noeud de contrôle (KK) étant configuré pour recevoir des au moins deux noeuds de service (AF1, AF2) les informations de service (D1, D2) concernant ce service de communication,
- le noeud de contrôle (KK) déterminant, lors du procédé, si les informations de service (D1, D2) transmises par les au moins deux noeuds de service (AF1, AF2) concernent un seul et même service de communication et,
- si les informations de service (D1, D2) concernent un seul et même service de communication, le noeud de contrôle sélectionnant des informations de service parmi les informations de service (D1, D2) transmises et utilisant ces informations de service pour commander la qualité de service et/ou la taxation de service.

2. Procédé selon la revendication 1,
**caractérisé en ce que**
- si les informations de service (D1, D2) concernent un seul et même service de communication, le noeud de contrôle (KK) sélectionne un noeud de service (AF2) parmi les au moins deux noeuds de service (AF1, AF2) et utilise uniquement les informations de service (D2) provenant du noeud de service sélectionné (AF2) pour commander la qualité de service et/ou la taxation de service.

3. Procédé selon la revendication 1 ou 2,
**caractérisé en ce que**
le noeud de contrôle (KK) détermine si les informations de service (D1, D2) concernent un seul et même service de communication
- en vérifiant si des identificateurs de taxation concordants sont contenus dans les informations de service (D1, D2) transmises par les au moins deux noeuds de service.

4. Procédé selon l'une des revendications précédentes,
**caractérisé en ce que**
le noeud de contrôle (KK) détermine si les informations de service (D1, D2) concernent un seul et même service de communication
- en vérifiant si les informations de service (D1, D2) transmises par les au moins deux noeuds de service (AF1, AF2) concernent un seul et même terminal de communication (UE) et
- le noeud de contrôle (KK) vérifie, uniquement si les informations de service (D1, D2) concernent un seul et même terminal de communication (UE), si des identificateurs de taxation concordants sont contenus dans les informations de service (D1, D2).

5. Procédé selon l'une des revendications précédentes,
**caractérisé en ce que**
le noeud de contrôle (KK) détermine si les informations de service concernent un seul et même service de communication
- en vérifiant si des informations de commande concordantes, des 5-uplets IP, pour une passerelle (G) transmettant les données utiles du service de communication sont contenues dans les informations de service (D1, D2) transmises par les au moins deux noeuds de service (AF1, AF2).

6. Procédé selon l'une des revendications précédentes,
**caractérisé en ce que**
- le noeud de contrôle informe les noeuds de service non sélectionnés (AF1) du fait que les informations de service (D2) d'un autre noeud de service (AF2) sont utilisées, suite à quoi les noeuds de service non sélectionnés (AF1) peuvent supprimer leur liaison de signalisation (S1) vers le noeud de contrôle (KK).

7. Procédé selon l'une des revendications précédentes,
**caractérisé en ce que**
- le noeud de contrôle informe les noeuds de service non sélectionnés (AF1) du fait que les informations de service (D2) d'un autre noeud de service (AF2) sont utilisées et
- le noeud de contrôle (KK) supprime les liaisons de signalisation (S1) vers les noeuds de service non sélectionnés (AF1).

8. Procédé selon l'une des revendications précédentes,
**caractérisé en ce que,**
- lorsqu'un noeud de service n'intervient que de façon provisoire dans le service de communication, on maintient au moins une liaison de signalisation entre le noeud de contrôle (KK) et un deuxième noeud de service (AF2) de manière à ce que le noeud de contrôle (KK) puisse utiliser les informations de service (D2) provenant du deuxième noeud de service (AF2) à la fin de l'intervention du noeud de service.

9. Procédé selon l'une des revendications précédentes,
**caractérisé**
- **en ce que** le noeud de contrôle (KK) est un noeud de réseau de communication réalisant une fonction de décision de politique, un noeud de réseau de communication réalisant une fonction de décision de politique de service, un noeud de réseau de communication réalisant une fonction de règles de taxation ou un noeud de réseau de communication réalisant une fonction de contrôle de politique et de règles de taxation et/ou
- **en ce que** le noeud de service (AF1, AF2) est un noeud de réseau de communication réalisant une fonction de commande de session d'appel ou un serveur fournissant le service de communication et/ou
- **en ce que** l'un des noeuds de service (AF1, AF2) est un noeud de contrôle du réseau domestique qui transmet des informations de service au noeud de contrôle dans le réseau visité.

10. Noeud de contrôle (KK), formé
- d'un moyen pour recevoir des informations de service (D1, D2) qui concernent un service de communication, les informations de service (D1, D2) étant transmises par au moins deux noeuds de service (AF1, AF2),
- d'un moyen pour déterminer si les informations de service (D1, D2) transmises par les au moins deux noeuds de service (AF1, AF2) concernent un seul et même service de communication,
- d'un moyen pour sélectionner des informations de service (D1, D2) parmi les informations de service transmises lorsque les informations de service (D1, D2) concernent un seul et même service de communication et
- d'un moyen pour utiliser les informations de service (D1, D2) pour commander la qualité de service et/ou la taxation du service de communication.

11. Noeud de contrôle (KK) selon la revendication 10, le noeud de contrôle (KK) sélectionnant, si les informations de service (D1, D2) concernent un seul et même service de communication, un noeud de service (AF2) parmi les au moins deux noeuds de service (AF1, AF2) et utilisant uniquement les informations de service (D2) provenant du noeud de service sélectionné (AF2) pour commander la qualité de service et/ou la taxation de service.

12. Noeud de contrôle (KK) selon les revendications 10 ou 11, la détermination pour savoir si les informations de service (D1, D2) concernent un seul et même service de communication comprenant le fait de vérifier si des identificateurs de taxation concordants sont contenus dans les informations de service (D1, D2) transmises par les au moins deux noeuds de service (AF1, AF2).

13. Noeud de contrôle (KK) selon les revendications 10 à 12, la détermination pour savoir si les informations de service (D1, D2) concernent un seul et même service de communication comprenant le fait de vérifier si les informations de service (D1, D2) transmises par les au moins deux noeuds de service (AF1, AF2) concernent un seul et même terminal de communication (UE) et le noeud de contrôle (KK) vérifiant, si les informations de service (D1, D2) concernent un seul et même terminal de communication (UE), si des identificateurs de taxation concordants sont contenus dans les informations de service (D1, D2).

14. Noeud de contrôle (KK) selon les revendications 10 à 13, la détermination pour savoir si les informations de service (D1, D2) concernent un seul et même service de communication comprenant le fait de vérifier si des informations de commande concordantes, notamment des 5-uplets IP, pour une passerelle (G) transmettant les données utiles du service de communication sont contenues dans les informations de service (D1, D2) transmises par les au moins deux noeuds de service (AF1, AF2).

15. Noeud de contrôle (KK) selon les revendications 10 à 14, la sélection consistant à sélectionner le noeud de service (AF2) qui présente la priorité la plus élevée de tous les noeuds de service (AF1, AF2) dont les informations de service (D1, D2) concernent un seul et même service de communication.

16. Noeud de contrôle (KK) selon les revendications 10 à 15, formé en outre d'un moyen pour maintenir des liaisons de signalisation (S1) qui sont destinées à la transmission des informations de service (D1) entre le noeud de contrôle (KK) et les noeuds de service non sélectionnés (AF1) et d'un moyen pour informer les noeuds de service non sélectionnés (AF1) des événements se produisant lors de l'exécution du service par le biais des liaisons de signalisation (S1).

17. Noeud de contrôle (KK) selon les revendications 10 à 16, formé en outre d'un moyen pour informer les noeuds de service non sélectionnés (AF1) que les informations de service (D2) d'un autre noeud de service (AF2) sont utilisées.

18. Noeud de contrôle (KK) selon les revendications 10 à 17, formé en outre d'un moyen pour supprimer la liaison de signalisation (S1) vers les noeuds de service non sélectionnés (AF1).

19. Noeud de contrôle (KK) selon les revendications 10 à 18, au moins une liaison de signalisation étant maintenue entre le noeud de contrôle (KK) et un deuxième noeud de service (AF2), lorsqu'un noeud de service n'intervient que de façon provisoire dans le service de communication, de manière à ce que le noeud de contrôle (KK) puisse utiliser les informations de service (D2) provenant du deuxième noeud de service (AF2) à la fin de l'intervention du noeud de service.

20. Noeud de contrôle (KK) selon les revendications 10 à 19, le noeud de contrôle (KK) comprenant au moins un des noeuds de réseau de communication suivants :
- un noeud de réseau de communication ayant une fonction de décision de politique,
- un noeud de réseau de communication ayant une fonction de décision de politique de service,
- un noeud de réseau de communication ayant une fonction de règles de taxation ou
- un noeud de réseau de communication ayant une fonction de contrôle de politique et de règles de taxation.
